# EUROPEAN PATENT SPECIFICATION

(11) **EP 1 825 599 B1**
(45) Date of publication and mention of the grant of the patent: **11.02.2009**
(21) Application number: 05815571.4
(22) Date of filing: 20.10.2005
(51) Int. Cl.: H04B 1/38, H04M 1/02

(54) **PICTURE/VIDEO TELEPHONY FOR A PUSH-TO-TALK WIRELESS COMMUNICATIONS DEVICE**
BILD-/VIDEOTELEFONIE FÜR EIN DRAHTLOSES PUSH-TO-TALK-KOMMUNIKATIONSGERÄT
TELEPHONIE D'IMAGES/VIDEO POUR UN DISPOSITIF DE COMMUNICATION SANS FIL A BOUTON POUSSER POUR TRANSMETTRE

(30) Priority: 19.11.2004 US 993067
(43) Date of publication of application: 29.08.2007
(73) Proprietor: Sony Ericsson Mobile Communications AB, 221 83 Lund (SE)
(72) Inventor: DUNKO, Gregory A., Cary, NC 27511 (US)
(74) Representative: HOFFMANN EITLE
(86) International application number: PCT/US2005/037903
(87) International publication number: WO 2006/055172

(56) References cited:
- EP-A- 0 796 026
- WO-A-20/04034598
- US-A1- 2004 057 449
- US-A1- 2004 219 925
- US-B1- 6 281 925

## Description

### BACKGROUND

The present invention relates generally to wireless communications devices, and particularly to camera-equipped wireless communications devices capable of Push-To-Talk functionality.

Push-To-Talk (PTT) is becoming an increasingly popular technology for wireless communications devices. PTT allows point-to-point or point-to-multipoint communications between users. Transmissions are half-duplex (i.e., only one person can speak at a time), and require a user to press and hold a button on the wireless communications device while speaking into a microphone. Once the user is finished speaking, the user releases the button to give other participants a chance to speak. PTT is a function that is most often associated with private circuit-switched radio systems. However, recent efforts have led to a set of standards that will also permit PTT services over packet-switched public mobile networks. These services are known as PTT over Cellular (PoC), and use Session Initiation Protocol (SIP) to establish, maintain, and terminate communications between participants. Thus, PTT is a service that may be used over packet-switched and/or circuit-switched networks.

Additionally, a great many wireless communications devices come equipped with a digital camera. Camera-equipped devices permit users to capture still images and/or video and transmit them to remote parties via a wireless communications network. Typically, users operate the camera separately from communicative functions. That is, a user can capture an image, for example, and transmit the image to the remote party independently of a phone call.

Some existing technologies permit users to take advantage of real-time video telephony applications. In these types of applications, users are able to converse with remote parties and send images/video simultaneously. With these technologies, communications are full-duplex, and thus, do not require the user to push and hold a PTT button. However, because conventional PTT devices require the user to activate the PTT button and the camera functionality separately, it would be difficult for users to be able to enjoy these types of services. Accordingly, a system and method that allows a user of a PTT camera-equipped device to activate the microphone and camera substantially simultaneously would be desirable.

U.S. Pat. No. 6,281,925 discloses a full-duplex video telephone capable of switching between a voice mode and a voice and image communication mode. Because the telephone of the '925 patent is a full-duplex device, its transceiver remains activated for the duration of a call.

WO 2004/034598 discloses a removable loudspeaker unit that attaches to a handset. The removable unit includes a PTT button and is operable as a cellular telephone. However, depressing the PTT button does not activate any functionality other than the transmitter as is conventional.

EP 0 796 026 discloses a housing assembly for a mobile wireless communication device. The terminal includes a hinge assembly that allows the cover to pivot relative to the main housing into a plurality of mechanical configurations.

U.S. Pat. Appl. Pub. No. 2004/0057449 discloses a group of communication devices that convert various media into packets suitable for transmission over a data network.

### SUMMARY

The present invention is defined in claims 1, 15 and 23, respectively: Advantageous example embodiments of the invention are given in the dependent claims.

The present invention provides a wireless communications device having a housing, a microphone, a camera, a transceiver, a controller, and a push-to-talk actuator. The controller monitors an operational state of the Push-to-talk actuator when the wireless communications device is placed in a push-to-talk communications mode. The operational states include a depressed state and a released state. Based on this operational state, the controller generates one or more control signals to control the activation and deactivation of the microphone, the camera, and the transceiver.

In one embodiment, the controller detects when the push-to-talk actuator is in the depressed state. Based on this detected state, the controller generates a first control signal to activate the microphone to capture the user's voice, and a second control signal to activate the camera to capture images and/or video. The transceiver then transmits the voice and image/video being captured to the remote party in a half-duplex mode. The user may select the operational mode of the camera, specifying whether the camera should capture a still image or a video. Upon detecting that the push-to-talk actuator is in the released state, the controller generates additional control signals to stop the microphone and camera from capturing voice and image data, respectively. The controller also generates control signals to stop the transceiver from transmitting the voice and image data captured by the microphone and the camera.

### BRIEF DESCRIPTION OF THE DRAWINGS

Figure 1 illustrates a block diagram of a camera-equipped PTT wireless communications device according to one embodiment of the present invention.
Figure 2 illustrates a perspective view of a camera-equipped PTT wireless communications device according to one embodiment of the present invention.
Figure 3 illustrates a block diagram of a communications network in which one embodiment of the present invention may operate.
Figure 4 illustrates one embodiment of a menu displayed to the user according to one embodiment of the present invention.
Figure 5 illustrates a method according to one embodiment of the present invention.

### DETAILED DESCRIPTION

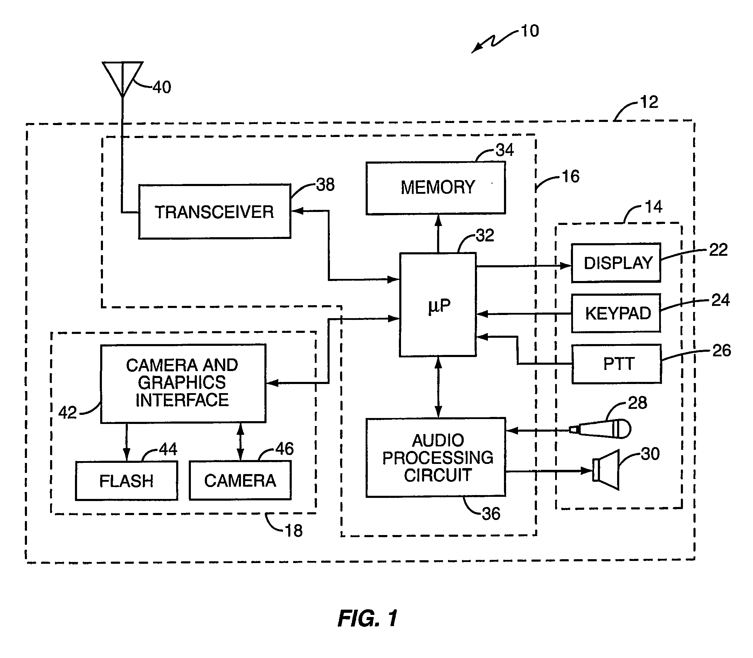

Referring now to the drawings, Figure 1 illustrates a camera-equipped PTT wireless communications device 10 according to the present invention. While the figures illustrate device 10 in terms of a camera-equipped cellular telephone, those skilled in the art will readily appreciate that the present invention is applicable to any hand-held wireless communications device having media imaging capability including, but not limited to, Personal Digital Assistants (PDAs), cellular telephones, satellite telephones, Personal Communication Services (PCS) devices, palm computers, or the like.

As seen in Figure 1, device 10 comprises a housing 12, user interface 14, communications circuitry 16, and a camera assembly 18. User interface 14 includes a display 22, a keypad 24, a PTT actuator 26, a microphone 28, and a speaker 30. User interface 14 provides a user with the necessary elements to interact with device 10. Display 22 permits users to view dialed digits, call status, menu options, and service information typically associated with wireless communications. Display 22 also acts as a viewfinder when device 10 is in a camera mode and as a videoconferencing display when device 10 is in a videoconferencing mode.

Keypad 24, disposed on a face of device 10, includes an alphanumeric keypad and other input controls such as a joystick, button controls, or dials. Keypad 24 allows the operator to dial numbers, enter commands, and select options from menu systems, as well as permit the user to control the functionality of camera assembly 18. For example, the user may employ designated keys or other controls on keypad 24 to focus camera assembly 18, or store captured images and/or video to memory in device 10.

PTT actuator 26 comprises a spring-loaded actuator, for example, that the user depresses when the user desires to speak to a remote party. As is known in the art, depressing the PTT actuator 26 causes controller 32 to send a request for a floor grant to the wireless communications network. If the request is granted, controller 32 may render an audible alert, for example, a "beep" or a series of "beeps," and enable microphone 28. Once microphone 28 is enabled, the user may speak to the remote party. According to the present invention, however, depressing PTT actuator 26 will activate camera assembly 18 such that both voice and image/video data may be transmitted to the remote party.

Microphone 28 converts the user's speech into electrical audio signals, and speaker 30 converts audio signals into audible sounds that can be heard by the user. Microphone 28 and speaker 30 may be any type of audio transducer known in the art, and are usually disposed on the housing 12 of device 10, although this is not required. As stated above, microphone 28 is enabled whenever the user depresses and holds PTT actuator 26, provided the user is granted the floor. When the user releases the PTT actuator 26, the microphone 28 is disabled.

Communications circuitry 16 comprises a controller 32, memory 34, an audio processing circuit 36, and a long-range transceiver 38 having an antenna 40. Memory 34 represents the entire hierarchy of memory in device 10, and may include both random access memory (RAM) and read-only memory (ROM). Computer program instructions and data required for operation of device 10 are stored in nonvolatile memory, such as EPROM, EEPROM, and/or flash memory, and may be implemented as discrete devices, stacked devices, or integrated with controller 32.

Controller 32 controls the operation of device 10 according to programs stored in memory 34, and may use known techniques to digitally alter images captured by camera assembly 18. The control functions may be implemented, for example, in a single microprocessor, or in multiple microprocessors. Suitable microprocessors may include, for example, both general purpose and special purpose microprocessors and digital signal processors. Controller 32 may interface with audio processing circuit 36, which provides basic analog output signals to speaker 30 and receives analog audio inputs from microphone 28. As described in more detail below, controller 32 may also generate control signals to control the operation of camera assembly 18, microphone 28, and transceiver 38 responsive to the user depressing PTT actuator 26.

Transceiver 38 is coupled to antenna 40 for receiving and transmitting cellular signals from and to one or more base stations in a wireless communications network. Transceiver 38 is a fully functional cellular radio transceiver, and operates according to any known standard, including but not limited to Global System for Mobile Communications (GSM), TIA/EIA-136, cdmaOne, cdma2000, UMTS, and Wideband CDMA. Transceiver 38 preferably includes baseband-processing circuits to process signals transmitted and received by the transceiver 38. Alternatively, the baseband-processing circuits may be incorporated in the controller 32. In one embodiment, transceiver 38 uses an access independent session control protocol (SCP), such as SIP, to support signaling for multi-media applications. However, it should be noted that while one embodiment of the invention as described herein uses SIP, the present invention may use any protocol known in the art employed in packet-switched and/or circuit-switched networks.

Camera assembly 18 includes a camera and graphics interface 42, a camera 46, and an optional integrated flash device 44. Camera assembly 18 may be any camera assembly known in the art, and may further include such elements as a lens assembly (not shown), an image sensor (not shown), and an image processor (not shown). Camera and graphics interface 42 interfaces camera assembly 18 with controller 32. As is known in the art, an image processor (not shown) may be interposed between camera and graphics interface 42 and camera 46 and/or flash device 44 to control camera 46 and/or flash device 44 and process images. While the camera and graphics interface 42 are shown as separate components in Figure 1, it should be understood that camera and graphics interface 42 might be incorporated with the image processor or controller 32.

Camera assembly 18 captures images that can be digitized and stored in memory 34, digitally altered by controller 32, output to display 22, or transmitted over a wireless network via transceiver 38. Camera assembly 18 may be used to capture still images, video, or both. Flash device 44 emits a flash of light to illuminate, if required, the subject of the image being captured. Flash device 44 may be integrated with device 10, or alternatively, may be a peripheral device coupled to device 10 via a system interface port (not show) typically provided with wireless communications devices. It should be noted that both flash device 44 and camera assembly 18 are responsive to control signals generated by controller 32 whenever the user depresses PTT actuator 26.

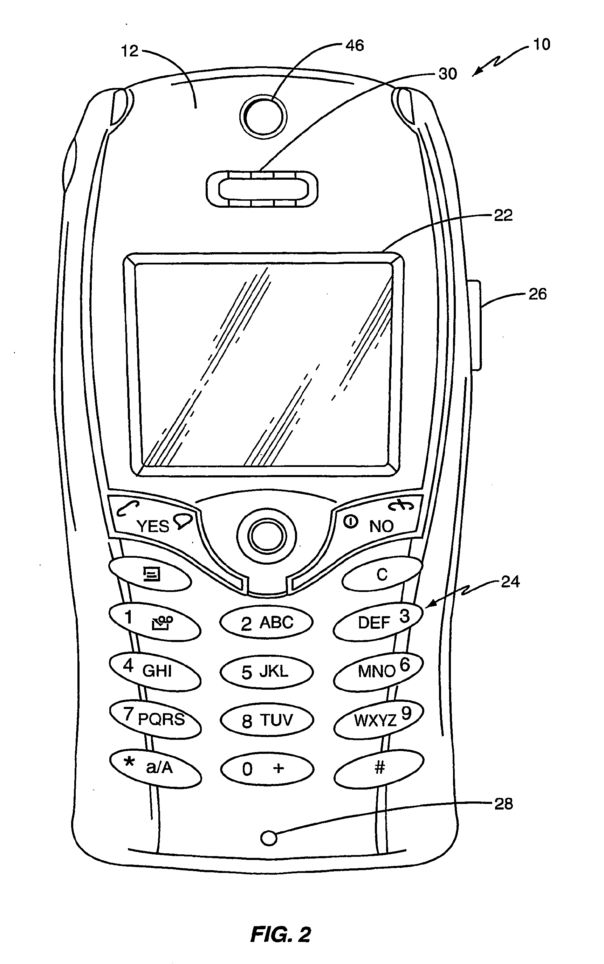

Figure 2 illustrates the physical appearance of an exemplary wireless communications device 10. As seen in Figure 2, the housing 12 of device 10 includes keypad 24, display 22, microphone 28, and speaker 30. The keypad and joystick control serve as user input 18, and are disposed on a face of housing 12. PTT actuator 26, which in Figure 2 is a button, is disposed on a side of the housing 12. A user wishing to communicate in a PTT (i.e., half-duplex) mode simply depresses PTT actuator 26 and speaks into microphone 28. When the user is finished transmitting, the user releases PTT actuator 26.

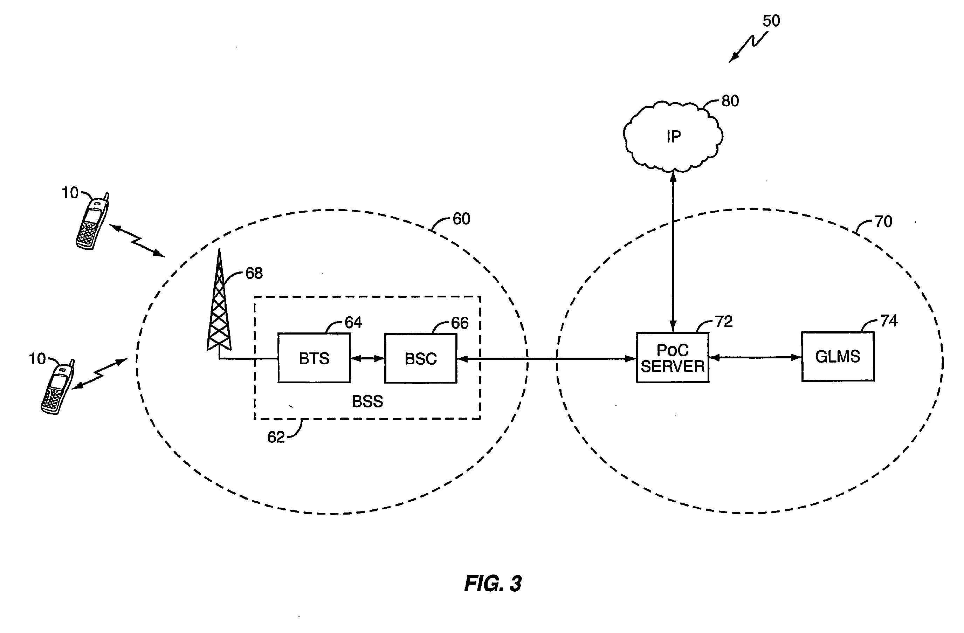

As previously stated, PoC is a set of standards that define PTT functionality over cellular networks, and is intended for use over a packet switched network. This includes packet switched networks such as GSM, GPRS, and EGPRS. Thus, the present invention may also be employed over these networks. However, the present invention is not limited to these networks, and may also be used over UTMS and CDMA packet switched networks, as well as circuit-switched PTT networks. Figure 3 illustrates the functional elements of one embodiment of a network 50 in which the device 10 of the present invention may operate. Network 50 comprises a packet-switched network 60 to communicate with one or more devices 10 and a core network 70. Optionally, core network 60 may connect to a public or private IP network 80.

Packet switched network 60 comprises a Base Station Subsystem (BSS) 62 having one or more Base Transceiver Stations (BTS) 64, and a Base Station Controller (BSC) 66. Base Transceiver Stations (BTS) 64 provides an interface between devices 10 and the packet switched network 60. The BTS 64 contains radio transmission and reception equipment, up to and including the antennas 68, and includes the signal processing specific to the radio interface. The BSC 66 connects the BTS 64 with the core network 70, and performs most of the management and control functions of the BSS 62, for example, resource allocation and handover management. Those skilled in the art will appreciate that BSC 66 may also connect to other components not explicitly shown in the figures, such as a Serving GPRS Support Node (SGSN), a Gateway GPRS Support Node (GGSN), a Home Location Register (HLR), and a Serving Mobile Location Center (SMLC).

Core network 70 is an embodiment of a PoC network as described in the technical specification "Push-to-talk over Cellular (PoC); Architecture; PoC Release 2.0 (V2.0.8)" published jointly by Comneon, Ericsson, Motorola, Nokia, and Siemens. Core network 70 communicates with BSC 66, and comprises a PoC server 72 and a Group List Management Server (GLMS) 74. Core network 70 provides IP connectivity to devices 10, and provides authentication and authorization services to devices 10. Core network 70 also routes SIP signaling messages, for example, call set-up messages, between devices 10 and PoC server 72. While not specifically shown, core network 70 may also include one or more proxy servers, such as SIP proxies and/or SIP registrars, to route SIP signaling messages between devices 10 and PoC server 72.

The PoC server 72 is a network entity that provides services needed for PoC functionality, such as SIP session handling, group session handling, access control, floor control functionality, participant identification and media distribution. The PoC server 72 may function as a participating PoC server 72 or a controlling PoC server 72. The PoC server 72 is an endpoint for SIP, RTP (Real-Time Transport Protocol) and RTCP (Real Time Transport Control Protocol) signaling. As previously stated, SIP is the protocol used for signaling to establish, modify and terminate communication sessions. RTP is the protocol used to transport voice packets, and RTCP is the protocol used to perform floor control during PTT sessions. RTCP is described in the IETF standard RFC 3550.

The GLMS 74, is responsible for managing group lists, contact lists, and access lists associated with each device 10. A group list is a list of PTT groups to which a user belongs. Each PTT group comprises a collection of PoC user identities defined by a user creating the group. The user creating the group is the group owner and may modify or delete the group. The group is assigned an SIP address that serves as the group identifier. The contact list is a kind of address book accessible by devices 10 including addresses for other users or groups. Access lists define access restrictions for each device 10.

As previously stated, convention devices equipped for both PTT and camera functionality do not permit the user to simultaneously transmit both voice and images captured in real time to remote users. This is because these conventional devices require the user to depress and hold the PTT actuator 26 in order to speak to the remote party. As such, it is difficult for the user to actuate the camera assembly 18 to also capture the images and/or video to be sent. The present invention, however, provides a link between the activation of the PTT actuator 26, the microphone 28, transceiver 38, and camera assembly 18.

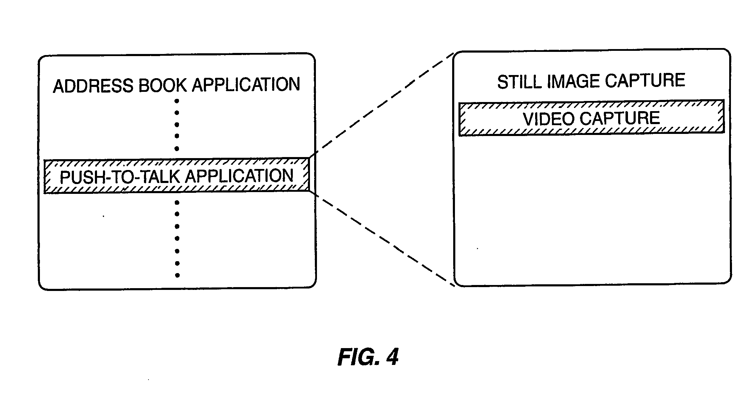

In one embodiment of the present invention, a user wishing to communicate using device 10 of the present invention initially launches a PTT application stored in memory 34 of device 10. As seen in Figure 4, the user may do this by simply selecting a menu option. As part of launching the PTT application, device 10 may prompt the user to select either a "STILL IMAGE CAPTURE," or a "VIDEO CAPTURE." Based on this selection, controller 32 may generate control signals to prepare camera assembly 18 for the selected option. Controller 32 may use this information to determine whether the remote parties have devices that are capable of receiving image and/or video data. Once the user selects the type of call to be made (e.g., still image or video), the user selects one or more remote parties to invite to the call. Once the PTT session is established, the user depresses PTT actuator 26 and speaks into the microphone 28, as is conventional. In addition, however, depressing PTT actuator 26 also causes camera assembly 18 to capture the still image or video as specified by the user, provided the remote parties have the capability to receive the image/video stream.

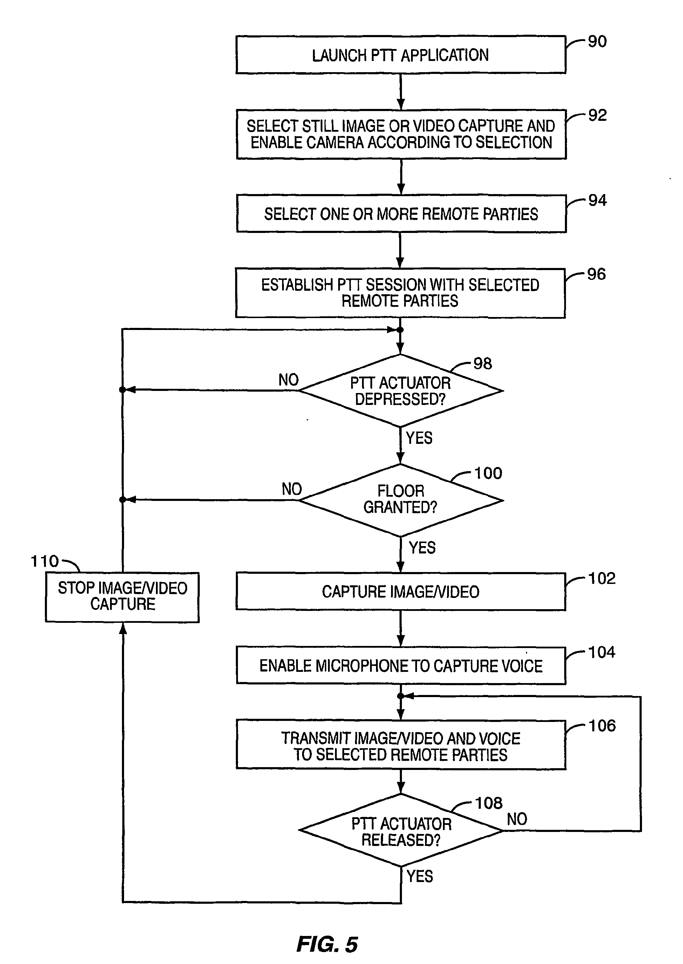

Figure 5 illustrates a method according to one embodiment of the present invention. The method begins when the user of device 10 launches the PTT application (box 90). The user then selects whether to send still images or video with his or her voice (box 92). Upon selection, controller 32 may generate control signals that enable camera assembly 18, or prepare camera assembly 18, to capture images/video according to the user's selection. The user then selects one or more remote parties with which to communicate, as previously described (box 94). A PTT session is then established with the selected one or more remote parties (box 96). As is known in the art, SIP may be used for the signaling to establish the PTT session; however, any suitable signaling protocol may also be used.

During the PTT session, controller 32 detects when the user has depressed PTT actuator 26 (box 98). If controller 32 has determined that the user has depressed PTT actuator 26, controller 32 causes transceiver 38 to send a message to PoC server 72 to request a control of the floor (box 100). As is known in the art, all users on a PTT session (i.e., half-duplex communications) must share a common channel to communicate with each other. Because only one user can communicate at a time, all parties on a call must vie to use the shared channel. The process that determines which party gets to communicate is called "floor control." The user that gets control of the floor receives a "floor grant," and is permitted to speak while the other users on the call must listen. For more information on floor control, the interested reader is directed to the "Push-to-talk over Cellular (PoC); Architecture; PoC Release 2.0 (V2.0.8)" technical specification published jointly by Comneon, Ericsson, Motorola, Nokia, and Siemens.

When the user of device 10 receives control of the floor, controller 32 will generate a control signal to cause camera assembly 18 to capture image/video as previously specified by the user (box 102). In addition, controller 32 also generates a control signal that enables microphone 28 to capture the user's voice (box 104). It should be understood that controller 32 may trigger the microphone 28 and camera assembly 18 together using a single generated control signal, or separately using multiple control signals. Transceiver 38 then transmits the captured image/video and the user's voice (box 106) to the selected remote parties, while controller 32 monitors the PTT actuator 26 to determine when the user releases it (box 108). Transceiver 38 will transmit the captured image/video so long as the user keeps the PTT actuator 26 depressed. When the user releases the PTT actuator 26, controller 32 may generate one or more control signals that deactivate camera assembly 18, microphone 28, and transceiver 38 (box 110). Alternatively, controller 32 may simply stop sending the one or more control signals used to activate ' camera assembly 18, microphone 28, and transceiver 38.

It should be noted that the present invention may be advantageously used in many embodiments. For example, when the user depresses PTT actuator 26, controller 32 may generate a control signal that causes camera assembly 18 to capture a still image of the user. This image can then be transmitted as part of the initial INVITE SIP message to the selected remote party, and displayed on the remote party's display as a type of caller ID. If the remote party accepts the invitation, controller 32 can then generate one or more control signals to capture video for transmission to the remote parties as previously described. In addition, this still image captured by the camera could be used to update remote party's address book. In this manner, users throughout the network are assured of having the "latest" image of any other user.

Additionally, Figure 5 illustrates that controller 32 generates the control signals that cause camera assembly 18 to capture images/video after the requesting user has been granted control of the floor. However, the present invention is not so limited. In one embodiment, controller 32 generates the control signal to camera assembly 18 to capture images/video before requesting the floor control grant from the PoC server 72. This might cause camera assembly 18 to begin capturing images/video early, but would minimize transmission delays upon receiving the floor grant.

The present invention has been described herein in terms of a packet-switched network. However, those skilled in the art will readily appreciate that the present invention may also be used over circuit-switched networks as well.

The present invention may, of course be carried out in other ways than those specifically set forth herein without departing from the scope of the appended claims. The present embodiments are to be considered in all respects as illustrative and not restrictive, and all changes coming within the scope of the appended claims are intended to the embraced therein.

## Claims

1. A wireless communications device (10) comprising:
a housing (12);
a microphone (28) integrated with the housing (12) to capture a user's voice;
a camera (18) integrated with the housing (12) to capture images of a subject;
a flash device to illuminate the subject;
a transceiver (38) in the housing (12) to transmit the user's voice and the captured images in a half-duplex mode to a remote party; and
a push-to-talk actuator (26) integrated with the housing (12) that, when depressed, is configured to:
trigger the microphone (28) to capture the user's voice;
trigger the camera (18) to capture the images; and
trigger the flash to illuminate the subject if illumination is required.

2. The device of claim 1 further comprising a controller (32) to detect a state of the push-to-talk actuator (26), and to generate one or more control signals to trigger the microphone (28) and the camera (18) and, if illumination is required, the flash device, responsive to the detected state.

3. The device of claim 2 wherein the controller (32) generates the one or more control signals upon receiving a floor grant from a wireless communications network (60).

4. The device of claim 2 wherein the controller (32) detects the push-to-talk actuator (26) in a depressed state and a released state.

5. The device of claim 4 wherein the controller (32) generates a first control signal to activate the microphone (28) and the camera (18) when the push-to-talk actuator (26) is in the depressed state.

6. The device of claim 5 wherein the controller (32) generates a second control signal to deactivate the microphone (28) and the camera (18) when the push-to-talk actuator (26) is in the released state.

7. The device of claim 5 wherein the controller (32) ceases generation of the first control signal to deactivate the microphone (28) and the camera (18) when the push-to-talk actuator (26) is in the released state.

8. The device of claim 4 wherein the controller (32) generates a first control signal to activate the microphone (28), and a second control signal to activate the camera (18) when the push-to-talk actuator (26) is in the depressed state.

9. The device of claim 8 wherein the controller (32) ceases generation of the first and second control signals to deactivate the microphone (28) and the camera (18) when the push-to-talk actuator (26) is in the released state.

10. The device of claim 8 wherein the controller (32) generates a third control signal to deactivate the microphone (28), and a fourth control signal to deactivate the camera (18) when the push-to-talk actuator (26) is in the released state.

11. The device of claim 2 wherein the controller (32) generates the one or more control signals based on a user-selected operational mode.

12. The device of claim 1 wherein the images captured by the camera (18) comprise a still image.

13. The device of claim 1 wherein the images captured by the camera (18) comprises video.

14. The device of claim 1 wherein the device (10) comprises a cellular telephone.

15. A method of transmitting voice and image data to a remote party via a wireless communications network comprising:
establishing a push-to-talk communications session with a remote party over a wireless communications network (60);
detecting operational state of a push-to-talk actuator (26) integrated with a housing (12) of a wireless communications device (10), the operational state including a depressed state and a released state;
activating a microphone (28) integrated with the housing (12) to capture a user's voice responsive to detecting the push-to-talk actuator (26) being in the depressed state;
activating a camera (18) integrated with the housing (12) to capture an image of a subject responsive to detecting the push-to-talk actuator (26) being in the depressed state; and
activating a flash device associated with the camera to illuminate the subject, if illumination is required, responsive to detecting the push-to-talk actuator being in the depressed state; and
transmitting the user's voice and the captured image in a half-duplex mode to the remote party responsive to detecting the push-to-talk actuator (26) being in the depressed state.

16. The method of claim 15 further comprising deactivating the microphone (28) and the camera (18) responsive to detecting the push-to-talk actuator (26) being in the released state.

17. The method of claim 15 further comprising generating a first control signal to activate the microphone (28) and the camera (18) and, if illumination is required, the flash device, responsive to the push-to-talk actuator (26) being in the depressed state.

18. The method of claim 15 further comprising generating a first control signal to activate the microphone (28), and a second control signal to activate the camera (18) and, if illumination is required, the flash device, responsive to the push-to-talk actuator (26) being in the depressed state.

19. The method of claim 15 further comprising selecting an operational mode in which to operate the camera (18), and activating the camera (18) and the microphone (28) responsive to the operational mode.

20. The method of claim 19 wherein the operational mode includes a still image capture mode.

21. The method of claim 19 wherein the operational mode includes a video capture mode.

22. The method of claim 15 wherein activating the camera (18) to capture an image comprises activating the camera (18) upon receipt of a floor grant from the wireless communications network (60).

23. A Push-To-Talk (PTT) communications system comprising:
a wireless communications network (60) to facilitate communications between participants engaged on a PTT call; and
a wireless communications device (10) comprising:
a microphone (28);
a camera (18);
a flash device;
a PTT actuator (26); and
a controller (32) configured to detect an operational state of the push-to-talk actuator (26), and based on the detected operational state, to:
activate the microphone (28) to capture a user's voice;
activate the camera (18) to capture images of a subject to be sent to a remote party along with the user's voice;
activate the flash device to illuminate the subject if illumination is required to capture the images.

24. The system of claim 23 wherein the wireless communications network (60) comprises a packet-switched network.

25. The system of claim 23 wherein the wireless communications network (60) comprises a circuit-switched network.

26. The system of claim 23 wherein the wireless communications device (10) further comprises a housing (12), and the microphone (28), the camera (18), the PTT actuator (26), and the controller (32) are integrated with the housing (12).

27. The system of claim 23 wherein the operational state comprises a depressed state and a released state.

28. The system of claim 27 wherein the controller (32) activates the microphone (28) and the camera (18) and, if illumination is required, the flash device, when the controller (32) detects that the PTT actuator (26) is in the depressed state.

29. The system of claim 28 wherein the controller (32) deactivates the microphone (28) and the camera (18) when the controller (32) detects that the PTT actuator (26) is in the released state.

## Patentansprüche

1. Drahtlos-Kommunikationsvorrichtung (10) mit:
einem Gehäuse (12);
einem mit dem Gehäuse (12) integrierten Mikrofon (28) zum Erfassen einer Benutzerstimme;
einer mit dem Gehäuse (12) integrierten Kamera (18) zum Aufnehmen von Bildern eines Gegenstands;
einer Blitzvorrichtung zum Beleuchten des Gegenstands;
einem Transceiver (38) in dem Gehäuse (12) zum Übertragen der Benutzerstimme und der erfassten Bilder in einem Halbduplexmodus an einen entfernten Beteiligten; und
einem mit dem Gehäuse (12) integrierten Push-to-Talk-Aktuator (26), der ausgestaltet ist, wenn gedrückt, zum:
Ansteuern des Mikrofons (28) zum Erfassen der Benutzerstimme;
Ansteuern der Kamera (18) zum Erfassen der Bilder; und
Ansteuern des Blitzes zum Beleuchten des Gegenstands, wenn eine Beleuchtung erforderlich ist.

2. Vorrichtung von Anspruch 1 mit ferner einer Steuereinheit (32) zum Detektieren eines Zustands des Push-to-Talk-Aktuators (26) und zum Erzeugen von einem oder mehreren Steuersignalen zum Ansteuern des Mikrofons (28) und der Kamera (18) und, wenn eine Beleuchtung erforderlich ist, der Blitzvorrichtung in Ansprechen auf den detektierten Zustand.

3. Vorrichtung von Anspruch 2, wobei die Steuereinheit (32) das eine oder die mehreren Steuersignale beim Erfassen einer Flurgewährung von einem Drahtlos-Kommunikationsnetzwerk (60) erzeugt.

4. Vorrichtung von Anspruch 2, wobei die Steuereinheit (32) den Push-to-Talk-Aktuator (26) in einem gedrückten Zustand und einem freigegebenen Zustand detektiert.

5. Vorrichtung von Anspruch 4, wobei die Steuereinheit (32) ein erstes Steuersignal zum Aktivieren des Mikrofons (28) und der Kamera (18) erzeugt, wenn der Push-to-Talk-Aktuator (26) in dem gedrückten Zustand ist.

6. Vorrichtung von Anspruch 5, wobei die Steuereinheit (32) ein zweites Steuersignal zum Deaktivieren des Mikrofons (28) und der Kamera (18) erzeugt, wenn der Push-to-Talk-Aktuator (26) in dem freigegebenen Zustand ist.

7. Vorrichtung von Anspruch 5, wobei die Steuereinheit die Erzeugung des ersten Steuersignals einstellt, um das Mikrofon (28) und die Kamera (18) zu deaktivieren, wenn der Push-to-Talk-Aktuator (26) in dem freigegebenen Zustand ist.

8. Vorrichtung von Anspruch 4, wobei die Steuereinheit (32) ein erstes Steuersignal erzeugt, um das Mikrofon (28) zu erzeugen, und ein zweites Steuersignal, um die Kamera (18) zu aktivieren, wenn der Push-to-Talk-Aktuator (26) in dem gedrückten Zustand ist.

9. Vorrichtung von Anspruch 8, wobei die Steuereinheit (32) die Erzeugung des ersten und des zweiten Steuersignals einstellt, um das Mikrofon (28) und die Kamera (18) zu deaktivieren, wenn der Push-to-Talk-Aktuator (26) in dem freigegebenen Zustand ist.

10. Vorrichtung von Anspruch 8, wobei die Steuereinheit (32) ein drittes Steuersignal zum Deaktivieren des Mikrofons (28) und ein viertes Steuersignal zum Deaktivieren der Kamera (18) erzeugt, wenn der Push-to-Talk-Aktuator (26) in dem freigegebenen Zustand ist.

11. Vorrichtung von Anspruch 2, wobei die Steuereinheit (32) das eine oder die mehreren Steuersignale auf Grundlage eines Benutzer-ausgewählten Betriebsmodus erzeugt.

12. Vorrichtung von Anspruch 1, wobei die durch die Kamera (18) erfassten Bilder ein Standbild umfassen.

13. Vorrichtung von Anspruch 1, wobei die durch die Kamera (18) erfassten Bilder Video umfassen.

14. Vorrichtung von Anspruch 1, wobei die Vorrichtung (10) ein Mobiltelefon ist.

15. Verfahren zum Übertragen von Sprach- und Bilddaten an einen entfernten Beteiligten über ein Drahtlos-Kommunikationsnetzwerk mit:
Errichten einer Push-to-Talk-Kommunikationssitzung mit einem entfernten Beteiligten über ein Drahtlos-Kommunikationsnetzwerk (60);
Detektieren eines Betriebszustands eines Push-to-Talk-Aktuators (26), der mit einem Gehäuse (12) einer Drahtlos-Kommunikationsvorrichtung (10) integriert ist, wobei der Betriebszustand einen gedrückten Zustand und einen freigegebenen Zustand enthält;
Aktivieren eines mit dem Gehäuse (12) integrierten Mikrofons (28), um eine Benutzerstimme zu erfassen, in Ansprechen auf das Detektieren, dass der Push-to-Talk-Aktuator (26) in dem gedrückten Zustand ist;
Aktivieren einer mit dem Gehäuse (12) integrierten Kamera (18), um ein Bild eines Gegenstands aufzunehmen, in Ansprechen auf das Detektieren, dass der Push-to-Talk-Aktuator (26) in dem gedrückten Zustand ist; und
Aktivieren einer der Kamera zugehörigen Blitzvorrichtung, um den Gegenstand zu beleuchten, wenn eine Beleuchtung erforderlich ist, in Ansprechen auf das Detektieren, dass der Push-to-Talk-Aktuator in dem gedrückten Zustand ist; und
Übertragen der Benutzerstimme und des erfassten Bildes in einem Halbduplexmodus an den entfernten Beteiligten in Ansprechen auf das Detektieren, dass der Push-to-Talk-Aktuator (26) in dem gedrückten Zustand ist.

16. Verfahren von Anspruch 15 mit ferner einem Deaktivieren des Mikrofons (28) und der Kamera (18) in Ansprechen auf das Detektieren, dass der Push-to-Talk-Aktuator (26) in dem freigegebenen Zustand ist.

17. Verfahren von Anspruch 15 mit ferner einem Erzeugen eines ersten Steuersignals, um das Mikrofon (28) und die Kamera (18) und, wenn eine Beleuchtung erforderlich ist, die Blitzvorrichtung zu aktivieren, in Ansprechen darauf, dass der Push-to-Talk-Aktuator (26) in dem gedrückten Zustand ist.

18. Verfahren von Anspruch 15 mit ferner einem Erzeugen eines ersten Steuersignals, um das Mikrofon (28) zu aktivieren, und eines zweiten Steuersignals, um die Kamera (18) und, wenn eine Beleuchtung erforderlich ist, die Blitzvorrichtung zu aktivieren, in Ansprechen darauf, dass der Push-to-Talk-Aktuator (26) in dem gedrückten Zustand ist.

19. Verfahren von Anspruch 15 mit ferner einem Auswählen eines Betriebsmodus, in dem die Kamera (18) betrieben wird, und einem Aktivieren der Kamera (18) und des Mikrofons (28) in Ansprechen auf den Betriebsmodus.

20. Verfahren von Anspruch 19, wobei der Betriebsmodus einen Standbilderfassungsmodus hat.

21. Verfahren von Anspruch 19, wobei der Betriebsmodus einen Videoerfassungsmodus hat.

22. Verfahren von Anspruch 15, wobei das Aktivieren der Kamera (18) zum Erfassen eines Bildes ein Aktivieren der Kamera (18) beim Empfang einer Flurerlaubnis von dem Drahtlos-Kommunikationsnetzwerk (60) umfasst.

23. Push-to-Talk- (TTT) Kommunikationssystem mit:
einem Drahtlos-Kommunikationsnetzwerk (60) zum Ermöglichen von Kommunikationen zwischen an einem PTT-Anruf teilnehmenden Teilnehmern; und
einer Drahtlos-Kommunikationsvorrichtung (10) mit:
einem Mikrofon (28) ;
einer Kamera (18);
einer Blitzvorrichtung;
einem PTT-Aktuator (26); und
einer Steuereinheit (32), die konfiguriert ist zum Erfassen eines Betriebszustands des Push-to-Talk-Aktuators (26) und auf Grundlage des erfassten Betriebszustands zum:
Aktivieren des Mikrofons (28), um eine Benutzerstimme zu erfassen;
Aktivieren der Kamera (18), um Bilder eines Gegenstands zu erfassen, die an einen entfernten Beteiligten zusammen mit der Benutzerstimme zu senden sind;
Aktivieren der Blitzvorrichtung, um den Gegenstand zu beleuchten, wenn eine Beleuchtung erforderlich ist, um die Bilder zu erfassen.

24. System von Anspruch 23, wobei das Drahtlos-Kommunikationsnetzwerk (60) ein paketvermitteltes Netzwerk ist.

25. System von Anspruch 23, wobei das Drahtlos-Kommunikationsnetzwerk (60) ein leitungsvermitteltes Netzwerk ist.

26. System von Anspruch 23, wobei die Drahtlos-Kommunikationsvorrichtung (10) ferner ein Gehäuse (12) umfasst, und das Mikrofon (28), die Kamera (18), der PTT-Aktuator (26) und die Steuereinheit (32) mit dem Gehäuse (12) integriert sind.

27. System von Anspruch 23, wobei der Betriebszustand einen gedrückten Zustand und einen freigegebenen Zustand umfasst.

28. System von Anspruch 27, wobei die Steuereinheit (32) das Mikrofon (28) und die Kamera (18) und, wenn eine Beleuchtung erforderlich ist, die Blitzvorrichtung aktiviert, wenn die Steuereinheit (32) erfasst, dass der PTT-Aktuator (26) in dem gedrückten Zustand ist.

29. System von Anspruch 28, wobei die Steuereinheit (32) das Mikrofon (28) und die Kamera (18) deaktiviert, wenn die Steuereinheit (32) erfasst, dass der PTT-Aktuator (26) in dem freigegebenen Zustand ist.

## Revendications

1. Dispositif de communication sans fil (10) comportant :
un boîtier (12) ;
un microphone (28) intégré au boîtier (12) pour capturer la voix d'un utilisateur ;
une caméra (18) intégrée au boîtier (12) pour capturer des images d'un sujet ;
un dispositif de flash pour éclairer le sujet ;
un émetteur - récepteur (38) dans le boîtier (12) pour transmettre la voix de l'utilisateur et les images capturées dans un mode semi-duplex à une partie à distance ;
un actionneur de messagerie vocale instantanée (26) intégré au boîtier (12) lequel, lors qu'il est actionné, est configuré pour :
déclencher le microphone (28) afin de capturer la voix de l'utilisateur ;
déclencher la caméra (18) afin de capturer les images ; et
déclencher le flash pour éclairer le sujet si un éclairage est requis.

2. Dispositif selon la revendication 1, comportant en outre un contrôleur (32) pour détecter un état de l'actionneur de messagerie vocale instantanée (26), et pour générer un ou plusieurs signaux de commande en vue de déclencher le microphone (28) et la caméra (18), et, si un éclairage est requis, de déclencher le dispositif de flash, en réponse à l'état détecté.

3. Dispositif selon la revendication 2, dans lequel le contrôleur (32) génère ledit un ou lesdits plusieurs signaux de commande suite à la réception d'une autorisation provenant d'un réseau de communication sans fil (60).

4. Dispositif selon la revendication 2, dans lequel le contrôleur (32) détecte l'actionneur de messagerie vocale instantanée (26) dans un état actionné et un état relâché.

5. Dispositif selon revendication 4, dans lequel le contrôleur (32) génère un premier signal de commande pour activer le microphone (28) et la caméra (18) lorsque l'actionneur de messagerie vocale instantanée (26) est dans l'état actionné.

6. Dispositif selon la revendication 5, dans lequel le contrôleur (32) génère un deuxième signal de commande pour désactiver le microphone (28) et la caméra (18) lorsque l'actionneur de messagerie vocale instantanée (26) est dans l'état relâché.

7. Dispositif selon la revendication 5, dans lequel le contrôleur (32) cesse la génération du premier signal de commande pour désactiver le microphone (28) et la caméra (18) lorsque l'actionneur de messagerie vocale instantanée (26) est dans l'état relâché.

8. Dispositif selon revendication 4, dans lequel le contrôleur (32) génère un premier signal de commande pour activer le microphone (28), et un deuxième signal de commande pour activer la caméra (18) lorsque l'actionneur de messagerie vocale instantanée (26) est dans l'état actionné.

9. Dispositif selon la revendication 8, dans lequel le contrôleur (32) cesse la génération des premier et deuxième signaux de contrôle pour désactiver le microphone (28) et la caméra (18) lorsque l'actionneur de messagerie vocale instantanée (26) est dans l'état relâché.

10. Dispositif selon la revendication 8 dans lequel le contrôleur (32) génère un troisième signal de commande pour désactiver le microphone (28), et un quatrième signal de commande pour désactiver la caméra (18) lorsque l'actionneur de messagerie vocale instantanée (26) est dans l'état relâché.

11. Dispositif selon la revendication 2, dans lequel le contrôleur (32) génère ledit un ou lesdits plusieurs signaux de commande sur la base d'un mode de fonctionnement sélectionné par l'utilisateur.

12. Dispositif selon la revendication 1, dans lequel les images capturées par la caméra (18) incluent une image fixe.

13. Dispositif selon la revendication 1, dans lequel les images capturées par la caméra (18) comportent de la vidéo.

14. Dispositif selon la revendication 1, dans lequel le dispositif (10) comporte un téléphone cellulaire.

15. Procédé pour transmettre des données d'image et vocales à une partie à distance par l'intermédiaire d'un réseau de communication sans fil, le procédé comportant les étapes consistant à :
établir une session de communication de messagerie vocale instantanée avec une partie à distance sur un réseau de communication sans fil (60) ;
détecter un état de fonctionnement d'un actionneur de messagerie vocale instantanée (26) intégré à un boîtier (12) d'un dispositif de communication sans fil (10), l'état de fonctionnement comportant un état actionné et un état relâché ;
activer un microphone (28) intégré au boîtier (12) pour capturer une voix d'un utilisateur en réponse à la détection du fait que l'actionneur de messagerie vocale instantanée (26) est dans l'état actionné ;
activer une caméra (18) intégrée au boîtier (12) pour capturer une image d'un sujet en réponse à la détection du fait que l'actionneur de messagerie vocale instantanée (26) est dans l'état actionné ; et
activer un dispositif de flash associé à la caméra pour éclairer le sujet, si un éclairage est nécessaire, en réponse à la détection du fait que l'actionneur de messagerie vocale instantanée est dans l'état actionné ; et
transmettre l'image capturée et la voix de l'utilisateur dans un mode semi-duplex à la partie à distance en réponse à la détection du fait que l'actionneur de messagerie vocale instantanée (26) est dans l'état actionné.

16. Procédé selon la revendication 15, comportant en outre l'étape consistant à désactiver le microphone (28) et la caméra (18) en réponse à la détection du fait que l'actionneur de messagerie vocale instantanée (26) est dans l'état relâché.

17. Procédé selon la revendication 15, comportant en outre l'étape consistant à générer un premier signal de commande pour activer le microphone (28) et la caméra (18), et, si un éclairage est nécessaire, pour activer le dispositif de flash, en réponse à la détection du fait que l'actionneur de messagerie vocale instantanée (26) est dans l'état activé.

18. Procédé selon la revendication 15, comportant en outre l'étape consistant à générer un premier signal de commande pour activer le microphone (28), et un deuxième signal de commande pour activer la caméra (18), et, si l'éclairage est nécessaire, pour activer le dispositif de flash, en réponse à la détection du fait que l'actionneur de messagerie vocale instantanée (26) est dans l'état activé.

19. Procédé selon la revendication 15, comportant en outre l'étape consistant à sélectionner un mode de fonctionnement dans lequel exploiter la caméra (18), et l'étape consistant à activer la caméra (18) et le microphone (28) en réponse au mode de fonctionnement.

20. Procédé selon la revendication 19, dans lequel le mode de fonctionnement comporte un mode de capture d'image fixe.

21. Procédé selon la revendication 19, dans lequel le mode de fonctionnement comporte un mode de capture de vidéo.

22. Procédé selon la revendication 15, dans lequel l'activation de la caméra (18) pour capturer une image comporte l'étape consistant à activer la caméra (18) suite à la réception d'une autorisation provenant du réseau de communication sans fil (60).

23. Système de communication par messagerie vocale instantanée (PTT) comportant :
un réseau de communication sans fil (60) pour faciliter les communications entre des participants engagés dans un appel par messagerie vocale instantanée (PTT) ; et
un dispositif de communication sans fil (10) comportant :
un microphone (28) ;
une caméra (18) ;
un dispositif de flash ;
un actionneur de messagerie PTT (26) ; et
un contrôleur (32) configuré pour détecter un état de fonctionnement de l'actionneur de messagerie vocale instantanée (26), et sur la base de l'état de fonctionnement détecté, pour :
activer le microphone (28) en vue de capturer la voix d'un utilisateur ;
activer la caméra (18) afin de capturer des images d'un sujet devant être envoyées à une partie à distance, avec la voix de l'utilisateur ;
activer le dispositif de flash pour éclairer le sujet si un éclairage est nécessaire pour capturer les images.

24. Système selon la revendication 23, dans lequel le réseau de communication sans fil (60) comporte un réseau à commutation de paquets.

25. Système selon la revendication 23, dans lequel le réseau de communication sans fil (60) comporte un réseau à commutation de circuits.

26. Système selon la revendication 23, dans lequel le dispositif de communication sans fil (10) comporte en outre un boîtier (12), et dans lequel, le microphone (28), la caméra (18), l'actionneur de messagerie PTT (26), et le contrôleur (32) sont intégrés au boîtier (12).

27. Système selon la revendication 23, dans lequel l'état de fonctionnement comporte un état actionné et un état relâché.

28. Système selon la revendication 27, dans lequel le contrôleur (32) active le microphone (28) et la caméra (18) et, si un éclairage est nécessaire, le dispositif de flash, lorsque le contrôleur (32) détecte que l'actionneur de messagerie PTT (26) est dans l'état actionné.

29. Système selon la revendication 28, dans lequel le contrôleur (32) désactive le microphone (28) et la caméra (18) lorsque le contrôleur (32) détecte que l'actionneur de messagerie PTT (26) est dans l'état relâché.
